(19) **Europäisches Patentamt / European Patent Office / Office européen des brevets**

(11) **EP 4 714 544 A1**

(12) **EUROPEAN PATENT APPLICATION**
published in accordance with Art. 153(4) EPC

(43) Date of publication:
**25.03.2026 Bulletin 2026/13**

(21) Application number: **24811358.1**

(22) Date of filing: **20.05.2024**

(51) International Patent Classification (IPC):
**B01L 3/00** (2006.01)

(52) Cooperative Patent Classification (CPC):
**B01D 29/603; B01D 29/44; B01D 29/90;**
**B01L 3/00;** B01D 2201/54

(86) International application number:
**PCT/KR2024/006784**

(87) International publication number:
**WO 2024/242419 (28.11.2024 Gazette 2024/48)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **19.05.2023 KR 20230064717**

(71) Applicant: **CURIOSIS INC.**
**Seoul 06221 (KR)**

(72) Inventors:
• **YUN, Hoyoung**
  **Seoul 06221 (KR)**
• **SHIN, Taehwan**
  **Seoul 06221 (KR)**
• **LEE, Yujin**
  **Seoul 06221 (KR)**
• **SHIN, Sunggyu**
  **Seoul 06221 (KR)**

(74) Representative: **Viering, Jentschura & Partner**
**mbB**
**Patent- und Rechtsanwälte**
**Am Brauhaus 8**
**01099 Dresden (DE)**

(54) **SYSTEM AND METHOD FOR AUTOMATICALLY SEPARATING OUT TARGET OBJECTS DESIGNED TO NOT BE EXPOSED TO OUTSIDE**

(57) The present disclosure relates to an automatic separation system and method for target objects designed to prevent external exposure. In one embodiment, the automatic separation system for target objects may include: a fluid injection device; a target object separation unit containing one or more target object separation devices; an integrated inlet for injecting fluid into the target object separation unit using the fluid injection device; a target object integrated outlet for discharging target objects concentrated in a specific direction from the target object separation unit; a target object collection unit; and a connection unit that includes at least one of a first connection part connecting the fluid injection device and the integrated inlet, or a second connection part connecting the target object integrated outlet and the target object collection unit.

FIG. 1

EP 4 714 544 A1

## Description

### CROSS-REFERENCE TO RELATED APPLICATION

This application is a continuation of International Application No. PCT/KR2024/006784 filed on May 20, 2024, which claims priority to Korean Patent Application No. 10-2023-0064717 filed on May 19, 2023, the entire contents of which are herein incorporated by reference.

### TECHNICAL FIELD

The present disclosure relates to a system and method for automatically separating target objects designed not to be exposed to the outside, and more specifically, to a system and method for closed automatic separation of target objects including one or more target object separation devices.

### BACKGROUD

Sample pre-treatment technology for separating and concentrating microparticles such as cells or plasma plays a very important role in various fields including biological research, in-vitro diagnostics, therapeutics, and pharmaceuticals. To separate and concentrate such specific microparticles or plasma, centrifuges are primarily used, which separate and concentrate microparticles or plasma mainly through density differences between cells. However, centrifuges are expensive equipment, and there is also a risk of physically damaging microparticles or plasma.

Accordingly, recently, microfluidic chip-based technology for separating and concentrating microparticles or plasma is being developed. This technology involves installing arbitrary structures capable of manipulating fluid flow within channels ranging from tens of micrometers to several millimeters to separate and concentrate microparticles or plasma. According to microfluidic chip-based microparticle or plasma separation and concentration technology, separation and concentration are possible with small amounts of reagents and low power, offering high portability, and enabling fast analysis and detection at low cost. However, when processing not small amounts, but liters to tens of liters of reagents, a single microfluidic chip requires a significant amount of time and labor.

Therefore, there is a need for a separation device or system that, unlike centrifuges, does not damage cells, and unlike microfluidic chips, can process large quantities of reagents.

### SUMMARY

One embodiment of the present disclosure aims to provide an automatic separation system and method for a target object designed not to be exposed to the outside, which performs excellent separation and concentration functions of target objects.

One embodiment of the present disclosure aims to provide a closed automatic separation system and method for a target object including one or more target object separation devices.

One embodiment of the present disclosure may provide an automatic separation system for a target object. The automatic separation system for a target object may include: a fluid injection device; a target object separation unit including one or more target object separation devices; an integrated inlet for injecting fluid into the target object separation unit using the fluid injection device; a target object integrated outlet for discharging target objects concentrated in a certain direction in the target object separation unit; a target object collection unit for collecting the target objects discharged through the target object integrated outlet; and a connection unit including at least one of a first connection part connecting the fluid injection device and the integrated inlet, or a second connection part connecting the target object integrated outlet and the target object collection unit.

In one embodiment, the automatic separation system for a target object may further include: a non-target object integrated outlet for discharging non-target objects, which are not the target objects, from the target object separation unit; and a non-target object collection unit for collecting the non-target objects discharged through the non-target object integrated outlet. The connection unit may include a third connection part connecting the non-target object integrated outlet and the non-target object collection unit.

In one embodiment, the one or more target object separation devices may be arranged in parallel.

In one embodiment, the connection unit may hermetically connect two or more of the fluid injection device, the target object separation unit, the integrated inlet, the target object integrated outlet, and the target object collection unit to prevent external exposure.

In one embodiment, the automatic separation system for a target object may further include: a user input unit; and a processor configured to control at least one of the fluid injection device or the connection unit. The processor may acquire a first user input for operating the automatic separation system for a target object through the user input unit, and may control the fluid injection device to continuously inject fluid into the target object separation unit based on the first user input.

In one embodiment, the automatic separation system for a target object may further include: a display; and a processor configured to control at least one of the fluid injection device or the connection unit. The processor may output separation operation information of the automatic separation system for a target object to the display. The separation operation information may include at least one of fluid information, target object information, non-target object information, flow rate information, separation speed information, elapsed time information, or required time information.

In one embodiment, the automatic separation system for a target object includes: a memory storing an algorithm for controlling flow rate; a user input unit; and a processor configured to control at least one of the fluid injection device or the connection unit. The processor may receive a second user input for controlling the flow rate through the user input unit, and may control the speed of the injected fluid based on the second user input and the algorithm for controlling the flow rate.

In one embodiment, the target object separation unit may be replaceable depending on the type of the target object and whether the target object separation unit is used.

In one embodiment, each of the one or more target object separation devices may include: an injection part into which fluid introduced from the integrated inlet is injected; a first channel part including one or more first structures, which allows the target objects to be concentrated and flow in a certain direction during the flow of the injected fluid; and a target object acquisition part for acquiring the target objects concentrated in the certain direction.

In one embodiment, each of the one or more target object separation devices may further include at least one of: a non-target object discharge part; a high-speed channel part extending and formed in at least a portion of the area between the injection part and the target object acquisition part; a second channel part formed separately from the first channel part and having the same height as the first channel part; or pillar structures arranged in one or more areas among the injection part, the first channel part, the second channel part, the target object acquisition part, and the non-target object discharge part.

One embodiment of the present disclosure aims to provide an automatic separation method for a target object, comprising steps of: injecting fluid into an integrated inlet of a target object separation unit using a fluid injection device; flowing the fluid by the target object separation unit which includes one or more target object separation devices; based on flowing the fluid, discharging target objects concentrated in a certain direction from the target object separation unit through a target object integrated outlet; and collecting the target objects discharged through the target object integrated outlet into a target object collection unit. In this method, at least one of the connection between the fluid injection device and the integrated inlet, or the connection between the target object integrated outlet and the target object collection unit, is hermetically connected to prevent external exposure.

In one embodiment, the method may further include steps of: based on flowing the fluid, discharging non-target objects, which are not the target objects, from the target object separation unit through a non-target object integrated outlet; and collecting the non-target objects discharged through the non-target object integrated outlet into a non-target object collection unit. The non-target object integrated outlet and the non-target object collection unit may be hermetically connected to prevent external exposure.

In one embodiment, the one or more target object separation devices may be arranged in parallel.

In one embodiment, the automatic separation method for a target object may include steps of: acquiring a first user input for operating the automatic separation system for a target object; based on the first user input, controlling at least one of the integrated inlet or the first connection part to continuously inject fluid into the target object separation unit using the fluid injection device; receiving a second user input for controlling the flow rate; based on the second user input and an algorithm for controlling the flow rate, controlling the speed of the injected fluid; and outputting separation operation information of the automatic separation system for a target object. The separation operation information may include at least one of fluid information, target object information, non-target object information, flow rate information, separation speed information, elapsed time information, or required time information.

In one embodiment, the target object separation unit may be replaceable depending on the type of the target object and whether the target object separation unit is used.

One embodiment of the present disclosure includes a program stored on a recording medium to cause a computer to execute the method according to one embodiment of the present disclosure.

One embodiment of the present disclosure includes a computer-readable recording medium having a program recorded thereon for causing a computer to execute the method according to one embodiment of the present disclosure.

One embodiment of the present disclosure includes a computer-readable recording medium having a database used in one embodiment of the present disclosure recorded thereon.

According to one embodiment of the present disclosure, target objects can be separated from a large quantity of fluid without damaging the target objects.

BRIEF DESCRIPTION OF THE DRAWINGS

Embodiments will be more clearly understood from the following detailed description taken in conjunction with the accompanying drawings in which:

FIG. 1 is a drawing illustrating an automatic separation system for a target object according to one embodiment of the present disclosure.
FIG. 2 is a drawing illustrating a target object separation unit including one or more target object separation devices according to one embodiment of the present disclosure.
FIG. 3A is a drawing illustrating a target object separation device according to one embodiment of the present disclosure.

FIG. 3B is a drawing illustrating a part of the target object separation device according to one embodiment of the present disclosure.

FIG. 4 is a drawing schematically illustrating a cross-sectional view of a target object separation device including pillar structures according to one embodiment of the present disclosure.

FIG. 5A is a drawing illustrating a method for manufacturing a target object separation device with improved QC (Quality Control) according to one embodiment of the present disclosure.

FIG. 5B is a drawing illustrating a QC method according to one embodiment of the present disclosure.

FIG. 6 is a drawing illustrating an automatic separation system for a target object according to one embodiment of the present disclosure.

FIG. 7 is a block diagram of an automatic separation device for a target object according to one embodiment of the present disclosure.

DETAILED DESCRIPTION

In order to clarify the technical idea of the present disclosure, embodiments of the present disclosure will be described in detail with reference to the accompanying drawings. In describing the present disclosure, if it is determined that a detailed description of a related known function or component may unnecessarily obscure the gist of the present disclosure, a detailed description thereof will be omitted. Components having substantially the same functional configuration in the drawings are given the same reference numerals and symbols as much as possible, even if they are illustrated on different drawings. For the sake of convenience in description, a device and method are described together, if necessary. Each operation of the present disclosure does not necessarily have to be performed in the order described, and may be performed in parallel, selectively, or separately.

General terms that are currently widely used were selected as terms used in the embodiments of the present disclosure as possible in consideration of functions in the present disclosure, but the terms may vary depending on the intention of those skilled in the art or precedents, the emergence of new technologies, and the like. In addition, in a specific case, there may also be terms arbitrarily chosen by the applicant, and in this case, the meanings of such terms will be described in detail in the description of the corresponding embodiments. Therefore, the terms used in the present specification should be defined based on the meanings of the terms and the overall content of the present disclosure, not simply based on the names of the terms.

Throughout the present disclosure, singular expressions may include plural expressions unless the context clearly specifies otherwise. It will be further understood that the terms such as "include" and "have" are intended to specify the presence of a feature, number, step, operation, component, part, or a combination thereof, and not to exclude the possibility of the presence or addition of one or more other features, numbers, steps, operations, components, parts or combinations thereof in advance. In other words, throughout the present disclosure, when a certain part "includes" a certain component, it means that other components may be further included rather than excluding other components, unless specifically stated to the contrary.

The expression such as "at least one of" modifies the entire list of components, not the individual components of the list. For example, "at least one of A, B, and C" and "at least one of A, B, or C" means only A, only B, only C, both A and B, both B and C, both A and C, A and B and C all, or a combination thereof.

In addition, the terms such as "... unit" and "... module" described in the present disclosure refer to a unit that processes at least one function or operation, which may be implemented as hardware or software, or a combination of hardware and software.

Throughout the present disclosure, when any one part is referred to as being "connected to" another part, it means that any one part and another part are "directly connected to" each other or are "electrically connected to" each other with another element interposed therebetween. In addition, any one part "including" any component means the further inclusion of other components rather than the exclusion of other components, unless specifically stated to the contrary.

The expression "configured (or set) to" used throughout the present disclosure may be interchangeably used with the expressions such as "suitable for", "having the capacity to", "designed to", "adapted to", "made to", or "capable of" depending on a situation. The term "configured (or set) to" may not necessarily mean "specifically designed to" in hardware. Instead, in some situations, the expression "a system configured to" may mean that the system is "capable of" doing something together with other devices or components. For example, the phrase "a processor configured (or set) to perform A, B, and C" may mean a dedicated processor (for example, an embedded processor) for performing a corresponding operation, or a generic-purpose processor (for example, CPU or application processor) capable of performing corresponding operations by executing one or more software programs stored in a memory.

The term "about" used in the present disclosure means within 10%, preferably within 5%, and more preferably within 1% of a given value or range.

One embodiment of the present disclosure aims to provide a target object separation system, device, and method for separating and/or concentrating specific microparticles such as cells or plasma in a desired direction, and more specifically, to provide a closed automatic separation system and method for a target object including one or more target object separation devices.

Throughout the present disclosure, "target object" or "target" refers to an object intended for separation through a target object separation device, which may include, for example, microparticles, plasma, and the like. Here, the microparticles may include red blood cells, platelets, white blood cells, circulating tumor cells, stem cells, effete stored erythrocytes, T cells derived from autologous T cell expansion, organic microparticles, inorganic microparticles, organometallic microparticles, metallic microparticles, aerosol particles, bacteria, yeast, fungi, algae, viruses, microinvertebrates or their eggs, pollen, cell or tissue fragments, cell debris, cellular fragments (e.g., cellular fragments associated with DNA or RNA purification), bioreactor-produced cells or granules, proteins, protein aggregates, prions, vesicles, liposomes, precipitates (e.g., precipitates from blood or blood fractions, industrial process precipitates, wastewater precipitates, etc.), granules or cells from fermented foods (e.g., granules or cells from fermented beverages), macromolecules, macromolecular aggregates, DNA, organelles, spores, bubbles, droplets, and exosomes.

Throughout the present disclosure, the target object separation device may also be referred to as a target object separation chip, micro-fluidic chip, or microfluidic chip.

As cell-based medical technologies such as cell therapies and biosimilars using cells have developed, the demand for improvements in cell processing has also rapidly increased. When using conventional centrifugation-based cell separation methods, there is a risk of external contamination during the process of transferring cells to the centrifuge, and cell damage due to centrifugal force exists. Furthermore, when several liters to tens of liters of samples need to be processed, separating cells by centrifugation requires significant time and labor, thus necessitating automation.

To solve these problems, the present disclosure aims to provide a closed automatic target object separation system including a target object separation device by combining the target object separation device that does not damage cells with an automatic driving device and a closed connection system (closed loop) to eliminate the risk of external contamination and automate the entire process.

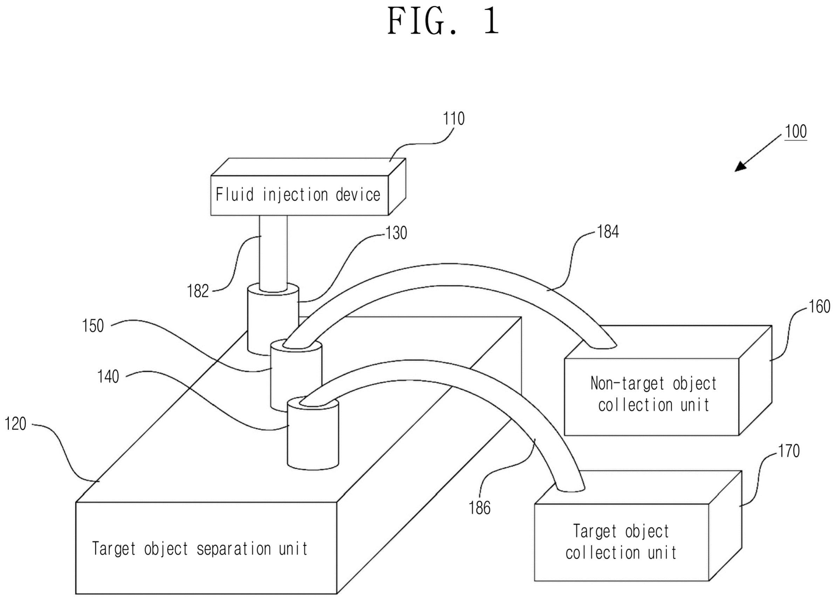

FIG. 1 is a drawing illustrating an automatic separation system for a target object according to one embodiment of the present disclosure.

Referring to FIG. 1, the automatic separation system (100) for a target object may include a fluid injection device (110), a target object separation unit (120), an integrated inlet (130) for injecting fluid into the target object separation unit (120) using the fluid injection device (110), a target object integrated outlet (140) for discharging target objects concentrated in a certain direction as a result of fluid flow in the target object separation unit (120), a non-target object integrated outlet (150) for discharging non-target objects, which are not target objects, as a result of fluid flow in the target object separation unit (120), a target object collection unit (170) for collecting the target objects discharged through the target object integrated outlet (140), and a non-target object collection unit (160) for collecting the non-target objects discharged through the non-target object integrated outlet (150). However, not all components shown in FIG. 1 are essential components of the automatic separation system (100) for a target object. The automatic separation system (100) for a target object may be implemented with more components than those shown in FIG. 1, or with fewer components than those shown in FIG. 1.

In one embodiment, the automatic separation system (100) for a target object may further include a connection unit comprising: a first connection part (182) connecting the fluid injection device (110) and the integrated inlet (130); a second connection part (186) connecting the target object integrated outlet (140) and the target object collection unit (170); a third connection part (184) connecting the non-target object integrated outlet (150) and the non-target object collection unit (160); a fourth connection part connecting from the integrated inlet (130) to the target object separation device; and a fifth connection part for fluid located outside the target object automatic separation device to move to the fluid injection device. The connection unit can hermetically connect the connected entities to prevent external exposure. For example, the first connection part (182) can hermetically connect the fluid injection device (110) and the integrated inlet (130) to prevent external exposure as fluid moves to the integrated inlet (130) by the fluid injection device (110). Also, for example, the second connection part (186) can hermetically connect the target object integrated outlet (140) and the target object collection unit (170) to prevent external exposure as target objects discharged from the target object integrated outlet (140) move to the target object collection unit (170). Further, for example, the third connection part (184) can hermetically connect the non-target object integrated outlet (150) and the non-target object collection unit (160) to prevent external exposure as non-target objects discharged from the non-target object integrated outlet (150) move to the non-target object collection unit (160).

According to one embodiment, the connection unit can prevent contamination due to the external environment by hermetically connecting each of the connected entities.

In one embodiment, the target object collection unit (170) and the non-target object collection unit (160) may each include a container for a solution containing target objects and non-target objects, respectively. For example, the target object collection unit (170) and the non-target object collection unit (160) may include containers, cell culture bags, blood bags, and the like.

For example, if the target object is white blood cells, red blood cells may be obtained from the non-target object integrated outlet. Or, if the target object is plasma, blood cells may be obtained from the non-target object integrated outlet. Or, if the target object is cells, a cell-removed culture medium may be obtained from the non-target object discharge outlet.

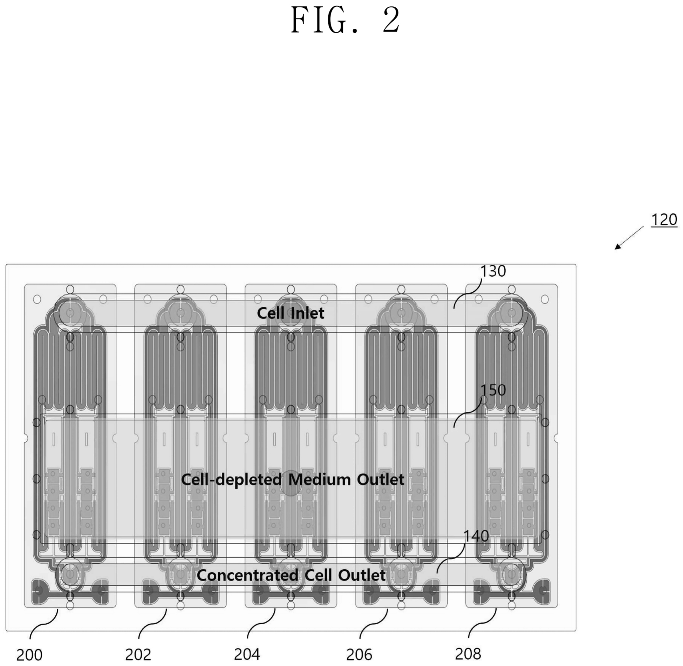

In one embodiment, the target object separation unit (120) may include a plurality of target object separation devices. The plurality of target object separation devices may be arranged in parallel and included in the target object separation unit (120). According to one embodiment, by connecting a plurality of target object separation devices in parallel, throughput per hour can be increased. This will be described in more detail later with reference to FIG. 2. Furthermore, the target object separation unit (120) may include disposable target object separation devices, allowing for replacement with each use.

According to one embodiment, since only the target object separation unit (120) needs to be replaced depending on the application, such as cell separation or whole blood separation, extended use according to the application becomes possible without hardware replacement.

In one embodiment, the target object separation unit (120) may include a structure that connects the target object separation unit (120) to enable automatic operation within the automatic separation system for a target object (100). For example, the target object separation unit (120) may include: a connection structure from the integrated inlet (130) to each of the target object separation devices; a connection structure from the target object acquisition parts of the target object separation devices to the target object integrated outlet (140); and a connection structure from the non-target object discharge parts of the target object separation devices to the non-target object integrated outlet (150).

For example, the connection structures included in the target object separation unit (120) and the connection parts that constitute the automatic separation system (100) (e.g., the first connection part (182), the second connection part (186), the third connection part (184), the fourth connection part, the fifth connection part, etc.) may include tubes, Luer Locks, cylinders, polygonal columns, pinch clamps, MPC quick connectors, and the like.

FIG. 2 is a drawing illustrating a target object separation unit including one or more target object separation devices according to one embodiment of the present disclosure.

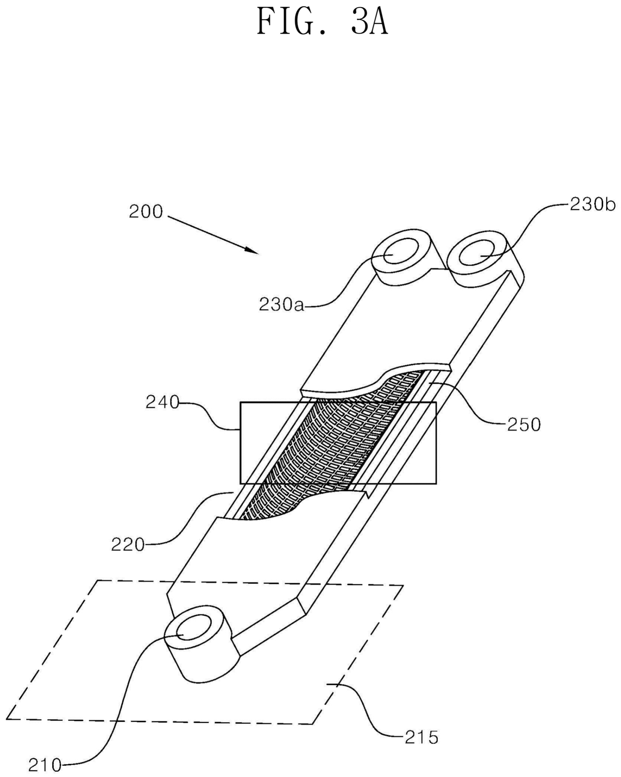

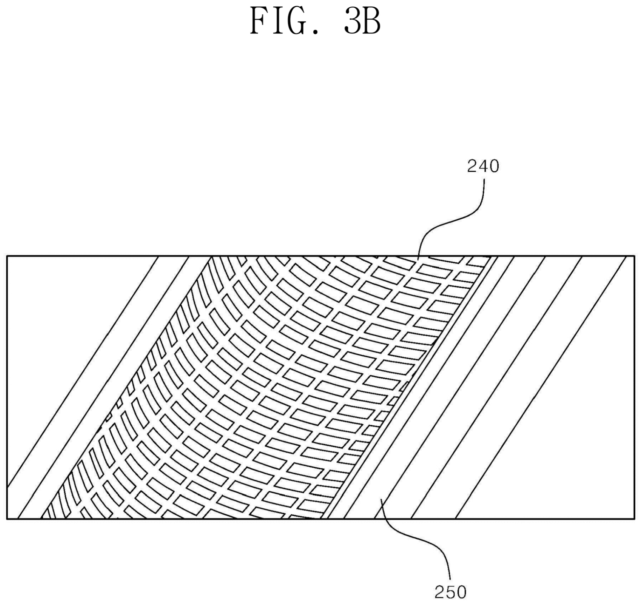

Referring to FIG. 2, the target object separation unit (120) may include one or more target object separation devices (200, 202, 204, 206, 208). Although FIG. 2 illustrates a case including five target object separation devices, this is merely an example, and various numbers of target object separation devices, such as two, three, four, six, or ten, may be included. In one embodiment, each of the one or more target object separation devices (200, 202, 204, 206, 208) may include: an injection part into which fluid introduced from the integrated inlet (130) is injected; a first channel part that allows the target objects to be concentrated and flow in a certain direction during the flow of the injected fluid; a target object acquisition part for acquiring the target objects concentrated in the certain direction; a non-target object discharge part for discharging non-target objects, which are not target objects; a high-speed channel part extending and formed in at least a portion of the area between the injection part and the target object acquisition part; a second channel part formed separately from the first channel part and having the same height as the first channel part; and pillar structures. The injection part, first channel part, target object acquisition part, non-target object discharge part, and high-speed channel part will be described in more detail later with reference to FIGS. 3A and 3B.

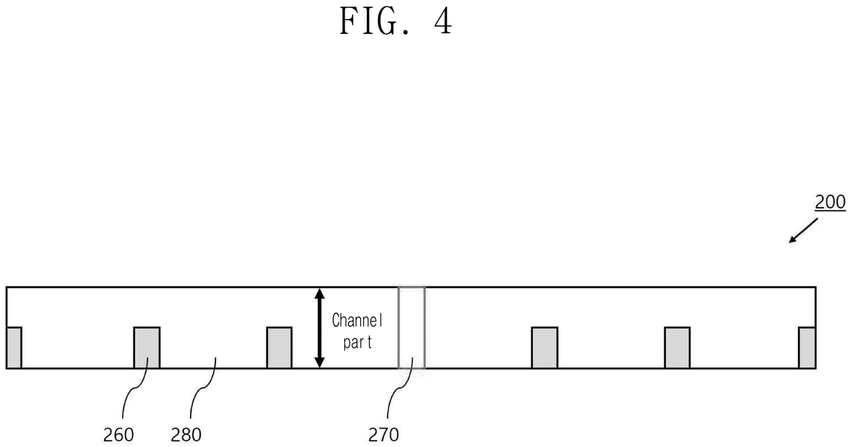

In one embodiment, the first channel part includes first structures. Intaglio structures may be formed by the first structures formed in the first channel part. For example, a groove shape formed between two first structures may be referred to as an intaglio structure. That is, the first channel part may include an intaglio structure having a groove shape in a direction perpendicular to the main flow direction of the fluid. The pillar structures may be arranged in the area of the channel part where no intaglio structures are formed. The pillar structures will be described in more detail later with reference to FIG. 4.

In one embodiment, on one surface of the target object separation unit (120), an integrated inlet (130) for injecting fluid into the target object separation unit (120), a target object integrated outlet (140) for discharging target objects concentrated in a certain direction as a result of fluid flow in the target object separation unit (120), and a non-target object integrated outlet (150) for discharging non-target objects, which are not target objects, as a result of fluid flow in the target object separation unit (120) may be formed.

In one embodiment, the integrated inlet (130) may be an inlet for injecting the fluid to be separated into the inlet of each of the one or more target object separation devices (200, 202, 204, 206, 208). Accordingly, the connection between the integrated inlet (130) and the inlet of the target object separation device may be formed by tubes, pipes, Luer Lock structures, cylindrical structures, polygonal column structures, pinch clamps, MPC quick connectors, and the like. That is, the connection unit may include a connection part connecting the integrated inlet (130) and the inlet of each of the one or more target object separation devices.

In one embodiment, the target object integrated outlet (140) may be an outlet for collecting and discharging the target objects discharged through the target object acquisition part of each of the one or more target object separation devices (200, 202, 204, 206, 208). Accordingly, the connection between the target object integrated outlet (140) and the target object discharge part of the target object separation device may be formed by tubes, pipes, Luer Lock structures, cylindrical structures, polygonal column structures, pinch clamps, MPC quick connectors, and the like. That is, the connection unit may include a connection part connecting the target object integrated outlet (140) and the target object acquisition part of each of the one or more target object separation devices.

In one embodiment, the non-target object integrated outlet (150) may be an outlet for collecting and discharging non-target objects discharged through the non-target object discharge part of each of the one or more target object separation devices (200, 202, 204, 206, 208). Accordingly, the connection between the non-target object integrated outlet (150) and the non-target object discharge part of the target object separation device may be formed by tubes, pipes, Luer Lock structures, cylindrical structures, polygonal column structures, pinch clamps, MPC quick connectors, and the like. That is, the connection unit may include a connection part connecting the non-target object integrated outlet (150) and the non-target object discharge part of each of the one or more target object separation devices.

For example, a case where the target object is cells is shown in FIG. 2. Cell culture medium is injected into the integrated inlet (130), and the injected cell culture medium is divided into the inlets of the plurality of target object separation devices (200, 202, 204, 206, 208). As the cell culture medium flows through each of the plurality of target object separation devices (200, 202, 204, 206, 208), concentrated cells may be obtained from the target object integrated outlet (140), and medium from which target object cells have been removed may be obtained from the non-target object integrated outlet (150).

FIG. 3A is a drawing illustrating a target object separation device according to one embodiment of the present disclosure.

Referring to FIG. 3A, the first target object separation device (200) among the one or more target object separation devices (200, 202, 204, 206, 208) included in the target object separation unit (120) in FIG. 2 will be described as an example of the target object separation device. However, it is understood that similar configurations can also be applied to the other target object separation devices (202, 204, 206, 208).

In one embodiment, the first target object separation device (200) may include an inlet (210), an injection part (215), a first channel part (220), a second channel part (not shown), a target object acquisition part (230b), a non-target object discharge part (230a), a high-speed channel part (250), and the like (however, the second channel part and the high-speed channel part (250) may be optional configurations). In one embodiment, fluid including microparticles may be injected into the first target object separation device (200) through the inlet (210). The injection part (215) may refer to the fluid flow pathway near the inlet (210). In one embodiment, as the injected fluid flows through the injection part (215) and the first channel part (220), the target objects may be concentrated and separated in a certain direction. Furthermore, the separated target objects may be concentrated in the target object acquisition part (230b). Also, non-target objects, which are not the target objects, may be concentrated in the non-target object discharge part (230a).

In one embodiment, at least one of the injection part (215), the first channel part (220), the target object acquisition part (230b), or the non-target object discharge part (230a) may include at least one pillar structure. For example, a target object separation device for separating white blood cells may have pillar structures in the injection part (215); a target object separation device for separating plasma may have pillar structures in the injection part (215) and the first channel part (220); and a target object separation device for separating cells may have pillar structures in all of the injection part (215), the first channel part (220), the target object acquisition part (230b), and the non-target object discharge part (230a). Pillar structures may also optionally be present in the second channel part of each of these devices. Furthermore, multiple pillar structures may be present in each area. However, this is merely an example, and pillar structures may be present in various numbers in various areas of the first target object separation device. The pillar structure according to one embodiment of the present disclosure can prevent channel deformation due to sagging at the center of the channel and can prevent damage to target objects or adverse effects on their flow. The pillar structures will be described in more detail later with reference to FIG. 4.

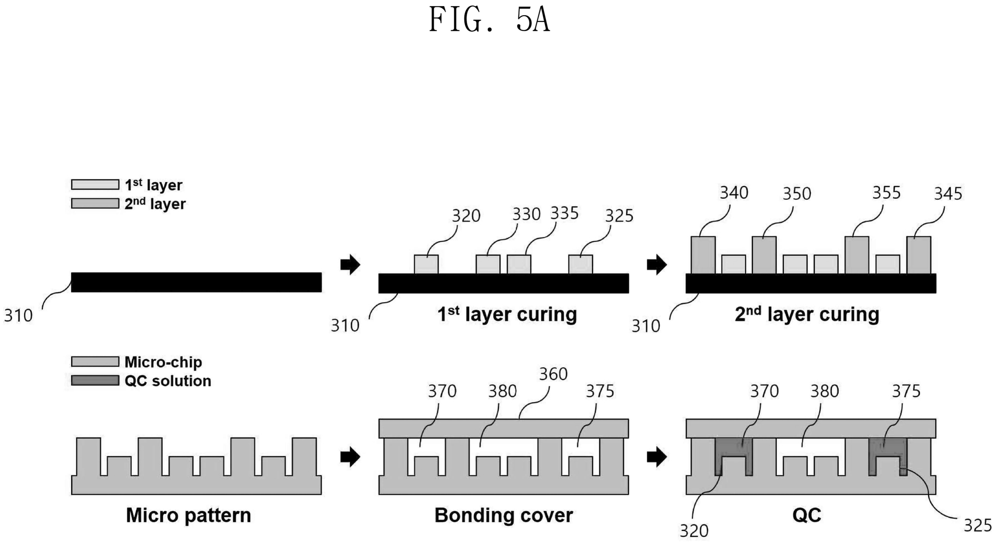

Although the second channel part is not shown in FIG. 3A, a second channel part may be formed separately from the first channel part (220) to confirm whether the height of the first channel part (220) is formed at a constant height. The method of forming the first channel part (220) and the second channel part will be described in more detail later with reference to FIG. 5A.

In one embodiment, fluid containing microparticles may be injected into the inlet (210). For example, fluid may be injected via a tube, syringe, pipette, or the like. Furthermore, for instance, the fluid may include whole blood for the purpose of obtaining white blood cells or plasma. Alternatively, the fluid may include a cell culture medium.

In one embodiment, while the injected fluid flows through the injection part (215) and the first channel part (220), target objects may be separated in a specific direction. Accordingly, by providing the target object acquisition part (230b) at one end of the first target object separation device (200) in a certain direction, the separated target objects can be acquired. Additionally, a non-target object discharge part (230a) may be provided at the end of the fluid channel of the first target object separation device (200) to acquire non-target objects.

Alternatively, a target object acquisition part may be provided at the end of the fluid channel of the first target object separation device (200), and a non-target object discharge part may be provided at one end of the first target object separation device (200) in a certain direction (not shown). For instance, the non-target object discharge part may form a channel so as to be provided in the middle of the fluid channel of the first target object separation device (200). Furthermore, multiple non-target object discharge parts may be provided.

In one embodiment, the target object of the first target object separation device (200) may vary depending on the pattern of the first channel part (220) of the target object separation device (200).

In one embodiment of the present disclosure, only one target object acquisition part (230b) and one non-target object discharge part (230a) are illustrated, but this is merely an example, and at least one of the target object acquisition part or the non-target object discharge part may be plural. For example, the first target object separation device (200) may include two or more, for example, 4 to 10 target object acquisition parts. In another example, the first target object separation device (200) may include three or more, for example, 4 to 30, and more specifically, 8 to 15 non-target object discharge parts. The number of each of these target object acquisition parts and non-target object discharge parts can be determined to be the same or different depending on the target object.

Furthermore, the target object acquisition part (230b) may be referred to as a first target object acquisition part, and the non-target object discharge part (230a) may be referred to as a second target object acquisition part. The configuration regarding the number of target object acquisition parts (230b) or non-target object discharge parts (230a) can be applied identically to the target object acquisition parts and non-target object discharge parts of the target object separation devices according to each embodiment mentioned below, even if not explicitly stated otherwise.

In one embodiment, multiple channels may be formed in the first target object separation device (200). A channel refers to a pathway extending from the inlet to the target object acquisition part or the non-target object discharge part, and the number of channels may be determined to be the same or different depending on the target object. The number of channels may be 1 to 40, specifically 2 to 30, and more specifically 5 to 20. For example, regarding the number of channels from the inlet to the target object acquisition part, a white blood cell separation device may have 6 channels, a plasma separation device may have 6 channels, and a cell separation device may have 2 channels. However, this is merely an example, and the first target object separation device (200) can be formed with various numbers of channels.

In one embodiment, each channel may split into multiple channels in the middle of the pathway leading from the inlet (210) to the target object acquisition part (230b) or the non-target object discharge part (230a), thereby creating additional channels. For instance, a separate channel may be created in the middle of a channel, and a non-target object discharge part may be formed at its end. For example, if 8 non-target object discharge parts exist, 8 additional channels may be created from the channel(s) originating from the inlet.

In one embodiment, a micropattern may be formed in the first channel part (220). The micropattern may be formed by one or more first structures and a plurality of intaglio structures. The intaglio structures have a groove shape in a direction perpendicular to the main flow direction of the fluid, and the raised shape between the plurality of intaglio structures forms the first structures. In one embodiment, as the fluid injected into the first target object separation device (200) through the inlet (210) flows through the injection part (215) and the first channel part (220), target objects may be concentrated and separated in a certain direction. This separation of target objects can be performed by a plurality of intaglio structures arranged on the ceiling or bottom surface of the channel provided in the first channel part (220). In one embodiment, the intaglio structures may also be referred to as intaglio channel parts or grooves.

In one embodiment, the plurality of intaglio structures may have a structure formed as multiple mutually disconnected parts. According to one embodiment, the intaglio structures can induce a secondary flow in a direction perpendicular to the main flow direction of the fluid, thereby efficiently separating and concentrating microparticles.

In one embodiment, the intaglio structure may be an inclined structure having a curved shape in the longitudinal direction. For example, the micropattern formed by the plurality of intaglio structures may be curved. For instance, the curve may include at least a part of a circle, at least a part of an ellipse, at least a part of a cycloid shape, any arbitrary curved shape, and the like.

In one embodiment, the micropattern of the first target object separation device (200) may be formed at an angle of 45 to 135 degrees with respect to the main flow direction of the fluid. For example, if the main flow direction of the fluid is taken as the x-axis, the angle ($\theta$) of the micropattern may have an angle of about 45 degrees to about 135 degrees. At this time, the angle ($\theta$) of the micropattern may be determined based on what the target object is. For example, depending on the target object, the angle ($\theta$) of the micropattern in one channel may be about 45 degrees, and the angle ($\theta$) of the micropattern in another channel may be about 135 degrees in the target object separation device. In another example, the angle ($\theta$) of the micropattern in one channel may be about 60 degrees, and in another channel, it may be about 120 degrees. In yet another example, the angle ($\theta$) of the micropattern in one channel may be about 75 degrees, and in another channel, it may be about 105 degrees. However, these are just examples, and the angle ($\theta$) of the micropattern can be appropriately selected depending on the target object.

In one embodiment, a high-speed channel part (250) may be formed in at least a portion of the area between the inlet (210) and the target object acquisition part (230b). Furthermore, no intaglio structures (or first structures) are arranged in the high-speed channel part (250), and the plurality of intaglio structures (or first structures) may be arranged only in areas other than the high-speed channel part (250). The high-speed channel part (250) will be described in more detail later with reference to FIG. 3B.

Although FIG. 3A shows the target object acquisition part (230b) or the non-target object discharge part (230a) arranged at the end of the first target object separation device (200), this is merely an example, and it is understood that at least one of the target object acquisition part or the non-target object discharge part may be located in the middle portion of the target object separation device. For example, if the target object separation device is a plasma separation device, the plasma acquisition part, which is the target object, may be located at the end of the plasma separation device, and the red blood cell or white blood cell discharge part, which is the non-target object, may be located in the middle portion of the separation device. Similarly, if the target object separation device is a white blood cell separation device, the white blood cell acquisition part, which is the target object, may be located at the end of the separation device, and the red blood cell discharge part, which is the non-target object, may be located in the middle portion of the separation device.

FIG. 3B is a drawing illustrating a part of the target object separation device according to one embodiment of the present disclosure.

Referring to FIG. 3B, an enlarged view of a portion of the first channel part (220) of FIG. 3A is shown. In one embodiment, the first channel part may include a plurality of first structures and a high-speed channel part (250). Furthermore, intaglio structures may be formed by the plurality of raised first structures. In one embodiment, the plurality of intaglio structures have a curved shape in the longitudinal direction, and a curved micropattern may be formed by these intaglio structures (and the raised first structures). For example, the micropattern formed by the plurality of intaglio structures may have an arc shape. Additionally, for example, the curve may include at least a part of a circle, at least a part of an ellipse, at least a part of a cycloid shape, any arbitrary curved shape, and the like.

In one embodiment, no intaglio structures are arranged in the high-speed channel part (250), and the plurality of intaglio structures may be arranged only in channel parts other than the high-speed channel part (250). According to one embodiment, the high-speed channel part (250) is a trench-shaped channel formed in the depth direction, in the direction where microparticles are concentrated. By forming the trench-shaped channel, the concentration efficiency of target objects can be increased, and loss in the opposite direction can be reduced. That is, the high-speed channel part (250) can serve as a structure for trapping microparticles.

In one embodiment, the high-speed channel part (250) may be formed in at least a portion of the area from the injection part to the target object acquisition part.

According to one embodiment, due to the presence of the high-speed channel part (250), fluid resistance can be reduced, and localized flow velocity can be increased. This can also lead to a decrease in pressure, causing flow towards the high-speed channel part (250) and thus increasing the concentration efficiency of target objects.

FIG. 4 is a drawing schematically illustrating a cross-sectional view of a target object separation device including pillar structures according to one embodiment of the present disclosure.

Referring to FIG. 4, a pillar structure (270) may be installed in the first target object separation device (200) to prevent sagging at the center of the channel. Although FIG. 4 also describes the first target object separation device (200) as an example, it is understood that embodiments of the present disclosure can also be applied to other target object separation devices.

In one embodiment, the pillar structure (270) may be arranged in at least one of the injection part, the first channel part, the second channel part, the target object acquisition part, or the non-target object discharge part, and multiple pillar structures (270) may be arranged. For example, in a target object separation device (200) for separating white blood cells, the pillar structure (270) may be arranged only in the injection part. Also, for example, in a target object separation device (200) for separating plasma, the pillar structure (270) may be arranged in the injection part and the first channel part. Furthermore, for example, in a target object separation device (200) for separating cells, the pillar structure (270) may be arranged in the injection part, the first channel part, and the target object acquisition part. The pillar structures may also optionally be present in the second channel part of each of these devices. For example, the pillar structure (270) may be arranged at the center of the channel, or at appropriate intervals, or between intaglio structures, or the pillar structure (270) may be installed at appropriate intervals in the central part of the channel.

In one embodiment, the pillar structure (270) may be arranged in areas other than the plurality of intaglio structures (280). For example, the pillar structure (270) may be arranged between at least some of the structures (260) (e.g., first structures or second structures) forming the intaglio structures (280). In one embodiment, the pillar structure (270) should be arranged in a manner that does not cause hemolysis and does not adversely affect fluid flow. Accordingly, the height of the pillar structure (270) may be identical to the height of the channel part, and when viewed as a cross-section cut along the xy-plane (with the main fluid flow direction as the x-axis and the channel width direction as the y-axis), the cross-section may be circular, elliptical, streamlined (e.g., teardrop-shaped), or a rounded polygon. If the cross-section is a polygon, the cross-sectional area at the vertices is small, and if target objects such as cells or non-target objects collide with the vertices, the impact force is large, which can cause damage to them. Therefore, if the pillar structure (270) is a polygon including vertices, the cross-section of the pillar structure (270) may be formed as a rounded polygon with rounded vertices.

In one embodiment, the height of the pillar structure (270) may be identical to the height of the channel part. Accordingly, the pillar structure (270) may have the shape of a cylinder, an elliptical column, a streamlined column, or a rounded polygonal column.

In one embodiment, when multiple pillar structures (270) are present, the spacing between the multiple pillar structures should be wider than the diameter of the microparticles to prevent damage to the microparticles. This is to prevent damage to the microparticles, such as trapping or hemolysis, caused by the pillar structures.

In one embodiment, the pillar structure (270) may be manufactured from plastic. In this case, the aspect ratio (height / length of cross-section; i.e., height of channel part / maximum length of cross-section) of the pillar structure (270) should be less than or equal to a specific value. For example, when manufacturing the target object separation device (200) using the QDM (Quick Delivery Mold) method, if the aspect ratio of the pillar structure (270) exceeds 3, the pillar structure may be damaged during the manufacturing process. Accordingly, the maximum length of the cross-section of the structure can be determined based on the height of the channel part. For example, if the height of the channel part is approximately $40\mu m$, the maximum length of the structure's cross-section should be at least approximately $13\mu m$.

In one embodiment, to prevent sagging at the center of the channel, at least one pillar structure (270) may be arranged within a point that is approximately 50% of the channel width from both ends of the channel. For example, a pillar structure (270) may be arranged at the center of the channel, or pillar structures (270) may be arranged at points that are approximately 1/3, i.e., approximately 33%, of the channel width from both ends of the channel.

In one embodiment, if multiple pillar structures (270) are present, the spacing between the pillar structures (270) should be equal to or greater than the length of the intaglio structures (280) to avoid affecting the flow of microparticles. According to the separation principle of the target object separation device, when a sample is injected into the target object separation device, a secondary flow (defocusing flow) is formed along the inclined direction of the intaglio structures (280), and an opposite flow (focusing flow) may occur in the channel part. At this time, the microparticles may be biased towards one wall by this opposite flow, allowing the particles to be separated. In this process, if the pillar structures (270) are present at intervals shorter than the length of the intaglio structures (280), the flow in the direction of the intaglio structures (defocusing flow) will be hindered by the pillar structures (270), and as a result, the opposite flow (focusing flow) will weaken, which can affect the separation efficiency of the target object separation device (200). Accordingly, the spacing of the pillar structures (270) can be formed wider than the length of the intaglio structures (280) so as not to interfere with the secondary flow.

According to one embodiment, sagging at the central part of the channel in the target object separation device can be prevented by using the pillar structures (270).

FIG. 5A is a drawing illustrating a method for manufacturing a target object separation device with improved QC (Quality Control) according to one embodiment of the present disclosure.

Referring to FIG. 5A, a method for manufacturing the target object separation device (200) may include providing a base substrate (310) and curing a first layer that forms one or more first structures (330, 335) and one or more second structures (320, 325) on the base substrate (310). In one embodiment, the first structures (330, 335) are structures formed in the first channel part (380) for the target objects to be concentrated and flow in a certain direction during the flow of fluid injected into the injection part, and the second structures (320, 325) may be structures formed in the second channel part (370, 375), which is formed separately from the first channel part to confirm whether the height of the first channel part is formed at a constant height. Furthermore, the first structures (330, 335) and the second structures (320, 325) may be formed at the same height. In one embodiment, the second channel part (370, 375) may be arranged in a repeating pattern or in a plurality of modified patterns over all or part of the second channel part (370, 375).

In one embodiment, the method for manufacturing the target object separation device (200) may include curing a second layer that forms pillars (340, 345) and blocking walls (350, 355) of the target object separation device on the base substrate (310). In one embodiment, the pillars (340, 345) and the blocking walls (350, 355) may be formed at the same height. The blocking walls (350, 355) are walls between the first channel part (380) and the second channel part (370, 375), and can allow the first channel part (380) and the second channel part (370, 375) to have independent channels that prevent fluid passage, inflow, or interference between them.

In one embodiment, the method for manufacturing the target object separation device (200) may include coupling a cover to the top of the pillars and blocking walls manufactured through the processes described above. By coupling the cover, the first channel part (380) and the second channel part (370, 375) can be formed. In one embodiment, the first channel part (380) and the second channel part (370, 375) may be singular or plural.

In one embodiment, a QC solution can be filled into the second channel part (370, 375) to proceed with a QC process. Furthermore, by irradiating the QC solution with a light source, the height of the second channel part (370, 375) and the height of the second structures (320, 325) can be identified. In one embodiment, the irradiation of the QC solution with a light source may be performed via LED or visible light.

In one embodiment, since the height of the second channel part (370, 375) is manufactured to be identical to the height of the first channel part (370), the height of the first channel part (370) can be indirectly determined by the height of the second channel part (370, 375) identified through the QC solution. Similarly, since the height of the second structures (320, 325) is manufactured to be identical to the height of the first structures (330, 335), the height of the first structures can be indirectly determined by the height of the second structures (320, 325) identified through the QC solution.

According to one embodiment, through the second channel part (370, 375), it can be confirmed whether the first channel part, through which fluid containing microparticles passes, is manufactured at a constant height before the target object separation device is used. Here, "constant height" does not refer to a specific single value but may include a concept of height within a specific range.

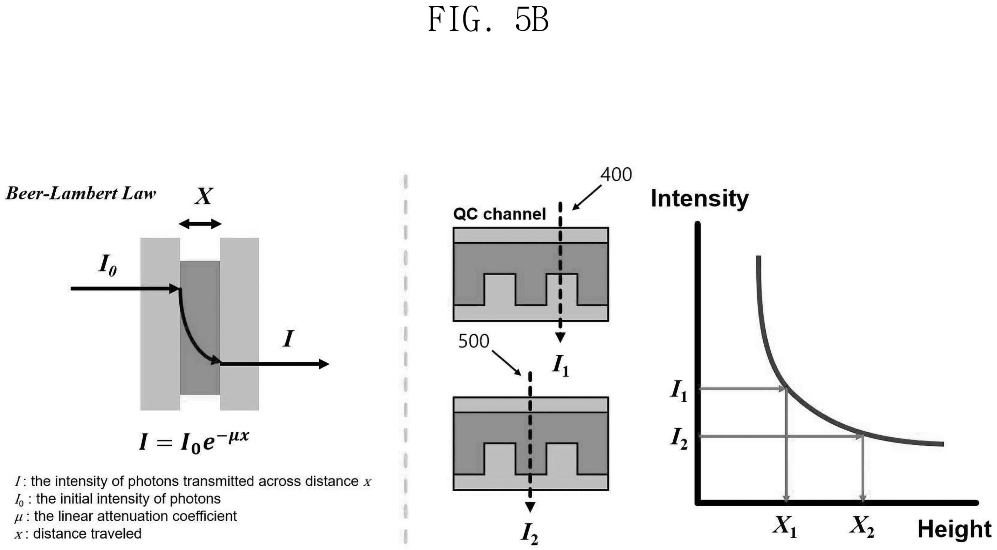

FIG. 5B is a drawing illustrating a QC method according to one embodiment of the present disclosure.

Referring to FIG. 5B, the QC of the target object separation device (200) can be detected by color change according to the height difference of the channel part. That is, the color appears darker in a higher channel and lighter in a lower channel. This color change (absorbance change) is detected by an optical sensor to calculate the height. To do this, a reference curve must first be prepared by photographing images of the same dye solution at various heights and analyzing the darkness using software. Based on this, a reference curve with height on the x-axis and absorbance on the y-axis is generated.

In one embodiment, a method is shown where the height of the second channel part (QC channel) and the height of the second structures are identified by irradiating the QC solution with a light source. While the description referring to FIG. 5B utilizes the Beer-Lambert Law, it is not limited thereto, and various methods capable of identifying the height of the second channel part and the second structures may be used. For example, after filling with the QC solution, images of various areas of the second channel part can be acquired, and a dedicated software can analyze these images to identify the height of various areas of the second channel part through color brightness.

In one embodiment, according to the Beer-Lambert Law, the intensity of light that has passed through a substance can be expressed as in the following [Equation 1].

$$[\text{Equation 1}]$$

$$I = I_0 e^{-\mu x}$$

Here, I may be the dose or intensity of light (or photons) after passing through a QC solution of thickness x, $I_0$ may be the initial dose or intensity of light (or photons), $\mu$ may be the linear attenuation coefficient, and x may be the thickness of the QC solution. Using [Equation 1] and the pre-prepared height-absorbance reference curve, the height of at least one of the second channel part or the second structures can be identified.

For example, after filling the second channel part with QC solution and acquiring an image, the intensity of light can be measured through dedicated software. If the intensity of light after passing through the second channel part at a first point (400) is $I_1$, it can be identified through the reference curve that the corresponding height to $I_1$ is $X_1$. Accordingly, it can be understood that the height obtained by subtracting the height of the second structures from the height of the second channel part is $X_1$, and furthermore, this height can be recognized as the height obtained by subtracting the height of the first structures from the height of the first channel part. Additionally, if the intensity of light after passing through the second channel part at a second point (500) is $I_2$, it can be identified through the reference curve that the corresponding height to $I_2$ is $X_2$. Accordingly, it can be understood that the height of the second channel part is $X_2$, and this height can be indirectly recognized as the height of the first channel part. Moreover, the height of the second structures can be identified as $X_2$-$X_1$, and this height can then be indirectly recognized as the height of the first structures. In one embodiment, if at least one of the height of the second channel part or the height of the second structures deviates from a reference range, the corresponding target object separation device may be determined as defective and not used.

In one embodiment, the QC solution used can be filled into the second channel part and, after the QC process is completed, can be cured to enhance the bonding strength of the target object separation device. For this purpose, the QC solution may include at least one main substance that is in a liquid state and has one or more vinyl groups. Furthermore, the QC solution may further include an initiator soluble in the main substance, a dye soluble in the main substance, and the like.

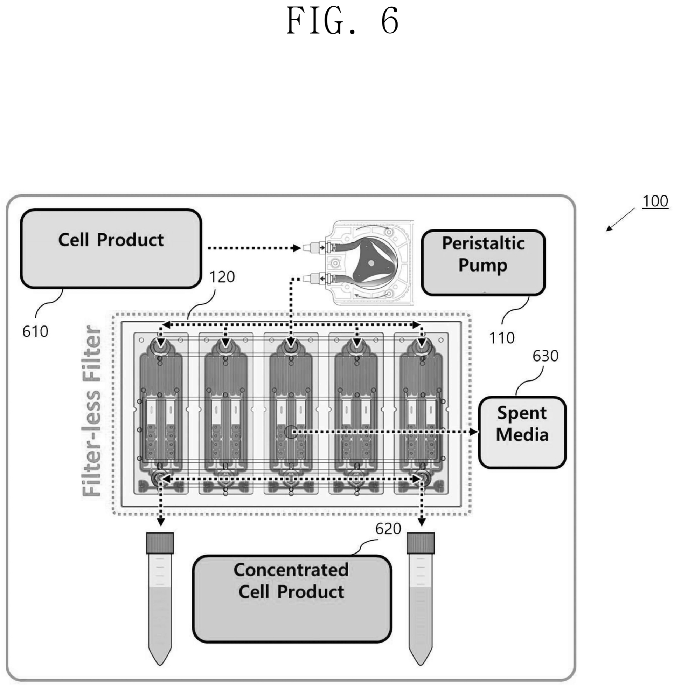

FIG. 6 is a drawing illustrating an automatic separation system for a target object according to one embodiment of the present disclosure.

Referring to FIG. 6, the automatic separation system (100) for a target object is a system for separating fluid (610) into target objects (620) and non-target objects (630). In one embodiment, the automatic separation system (100) for a target object may include a fluid injection device (110) and a target object separation unit (120). Furthermore, the target object separation unit (120) may include a plurality of target object separation devices arranged in parallel.

In one embodiment, the fluid injection device (110) can control the flow of fluid in the target object separation unit (120) such that the fluid is injected into the integrated inlet, and beyond the integrated inlet, into the inlet of each of the plurality of target object separation devices. For example, the fluid injection device (110) may be a pump such as a peristaltic pump, a diaphragm pump, a syringe pump, a gear pump, a vacuum pump, a piston pump, or the like. That is, the fluid injection device (110) may be a device for controlling fluid to continuously inject fluid into the integrated inlet and the inlets of the target object separation devices.

In one embodiment, fluid is injected into the integrated inlet of the target object separation unit (120) by the fluid injection device (110), and the fluid injected into the integrated inlet can then be individually introduced into the inlets of the plurality of target object separation devices. The fluids introduced into the inlets of the plurality of target object separation devices flow within each target object separation device, concentrating the target objects in a certain direction and discharging the non-target objects in another direction. Accordingly, each target object separation device may be equipped with a target object acquisition part for discharging target objects concentrated in a certain direction and a non-target object discharge part for discharging non-target objects. The target objects discharged from the plurality of target object acquisition parts are collected and discharged through the target object integrated outlet, and the discharged target objects can be collected in the target object collection unit. Similarly, the non-target objects discharged from the plurality of non-target object discharge parts are collected and discharged through the non-target object integrated outlet, and the discharged non-target objects can be collected in the non-target object collection unit.

In one embodiment, only the fluid injection device (110), the target object separation unit (120), the integrated inlet, the integrated outlet, and a connection part that hermetically connects the fluid injection device and the integrated inlet may be included in the target object automatic separation device. Alternatively, the target object collection unit and the non-target object collection unit may also be included in the target object automatic separation device.

Although FIG. 6 illustrates the separation of cells using cell culture medium as an example, the fluid is not limited to cell culture medium and may include fluid containing various microparticles such as whole blood. However, for convenience of description, the following explanation will use cell culture medium as an example of the fluid.

In one embodiment, the fluid injection device (110) can acquire the fluid (610), which is cell culture medium, and adjust it to be continuously injected into the target object separation unit (120). For example, the fluid injection device (110) may be a peristaltic pump that can adjust a certain amount of fluid to be injected into the integrated inlet within a set time. For instance, the fluid injection device (110) may perform the role of adjusting 0.1 to 20 mL of fluid to be injected per minute. The specified amount of fluid introduced into the integrated inlet of the target object separation unit (120) can be divided and injected into the inlets of the parallel-connected target object separation devices. As the cell culture medium flows inside the target object separation devices, the cells contained in the cell culture medium can be concentrated in a certain direction. Accordingly, a high concentration of cells can be obtained by the target object acquisition part for acquiring cells concentrated in a certain direction. For example, target objects with a concentration of about 5 to 100 times higher than the original fluid can be obtained. According to one embodiment, a high concentration of target objects can be obtained in a short time by the target object automatic separation device.

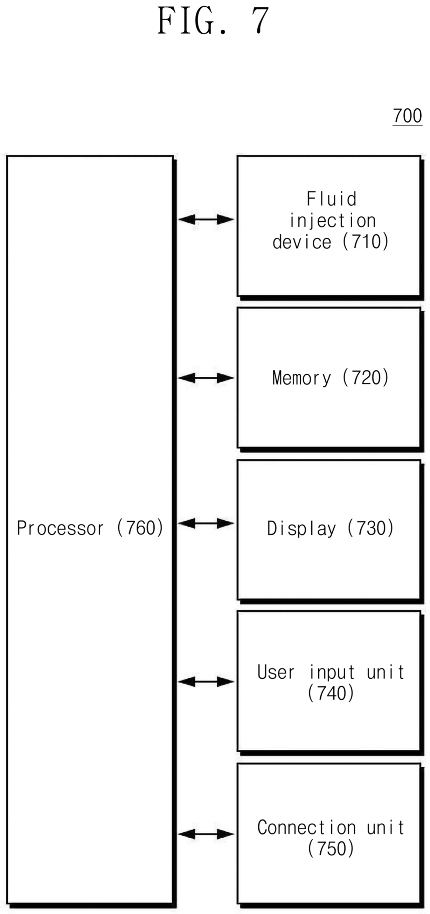

FIG. 7 is a block diagram of an automatic separation device for a target object according to one embodiment of the present disclosure.

Referring to FIG. 7, the automatic separation device (700) for a target object may include a fluid injection device (710), a memory (720), a display (730), a user input unit (740), a connection unit (750), and a processor (760). However, not all components shown in FIG. 7 are essential components of the automatic separation device (700) for a target object. The automatic separation device (700) for a target object may be implemented with more components than those shown in FIG. 7, or with fewer components than those shown in FIG. 7.

For example, the automatic separation device (700) for a target object may further include a target object separation unit, a target object collection unit, a non-target object collection unit, and the like.

In one embodiment, the fluid injection device (710) may be a device for continuously injecting fluid into the target object separation unit of the automatic separation device for a target object. The fluid injection device (710) may include a pump.

In one embodiment, various types of data, such as programs like applications and files, may be installed and stored in the memory (720). The processor (760) can access and utilize data stored in the memory (720), or it can store new data in the memory (720). In one embodiment, the memory (720) may include a database. In one embodiment, the memory (720) may store an algorithm for controlling the flow rate. Accordingly, the processor (760) can control the speed of the fluid injected using the fluid injection device by utilizing the algorithm stored in the memory (720). Furthermore, the speed of the fluid may be adjusted by controlling the operating speed of the fluid injection device, for example, its rotation speed.

In one embodiment, the display (730) can display and output information processed by the automatic separation device (700) for a target object. If the display (730) and a touch panel form a layered structure to constitute a touch screen, the display (730) can be used as an input device in addition to an output device. The display (730) may include at least one of a liquid crystal display, a thin film transistor-liquid crystal display, an organic light-emitting diode, a flexible display, a 3D display, or an electrophoretic display. Depending on the implementation form of the automatic separation device (700) for a target object, the automatic separation device (700) for a target object may include two or more displays (730).

In one embodiment, the user input unit (740) refers to a means by which a user inputs data to control the automatic separation device (700) for a target object. For example, the user input unit (740) may include, but is not limited to, a keypad, a dome switch, a touchpad (e.g., capacitive, resistive, infrared sensing, surface acoustic wave conduction, integrated tension measurement, piezoelectric effect, etc.), a jog wheel, a jog switch, a voice recognition device, a gesture recognition device, and the like.

In one embodiment, the connection unit (750) can connect the components of the automatic separation device (700) for a target object to each other. The connection unit (750) can perform the role of connecting the fluid, target object separation unit, target object collection unit, and non-target object collection unit within the automatic separation device (700) for a target object without fluid leakage and without exposure to the outside. For example, the connection unit (750) may include tubes, pipes, and the like. Furthermore, for example, the connection unit (750) may be formed of materials such as sterile silicone, Bioprene, DEHP-free PVC, and the like. In conventional centrifugation methods for separating target objects, it is essential to transfer the objects to a centrifugation tube, which inevitably exposes the objects to external contamination. In contrast, according to one embodiment, since it is made of a closed structure and is not exposed to the outside, contamination due to the external environment can be prevented.

In one embodiment, the processor (760) controls the overall operation of the automatic separation device (700) for a target object and may include at least one processor such as a CPU, GPU, and the like. The processor (760) can control other configurations included in the automatic separation device (700) for a target object to perform operations for operating the automatic separation device (700) for a target object. For example, the processor (760) may execute a program stored in the memory (720), read a stored file, or store a new file. In one embodiment, the processor (760) can perform operations for operating the automatic separation device (700) for a target object by executing a program stored in the memory (720). For example, the processor (760) can acquire user input for operating the automatic target object separation system through the user input unit (740) and, based on the user input, control the fluid injection device (710) to continuously inject fluid into the target object separation unit. Furthermore, for example, the processor (760) can output separation operation information of the automatic separation device (700) for a target object or the automatic separation system for a target object to the display (730). Here, the separation operation information may include operational status, fluid information (e.g., type, quantity, identification information of the fluid), target object information, non-target object information, flow rate information, separation speed information, elapsed time information, required time information, and the like. Additionally, for example, the processor (760) can acquire user input for controlling the flow rate through the user input unit (740) and, based on the algorithm for controlling the flow rate stored in the memory (720), control the speed of the injected fluid.

According to one embodiment, target objects can be separated automatically without separate manual work. While conventional centrifuges require manual removal of the supernatant after centrifugation, the device according to one embodiment performs the entire process automatically by separating target objects automatically, eliminating the need for separate manual work.

Furthermore, according to one embodiment, the automatic separation device (700) for a target object can continuously separate target objects regardless of the sample volume. Since target object separation devices like microfluidic chips do not have filter or membrane structures, clogging does not occur, allowing the automatic separation device (700) for a target object to continuously separate target objects regardless of sample volume.

Also, according to one embodiment, the automatic separation device (700) for a target object can process target objects without damaging them during separation. Unlike centrifugation, the target object separation device only experiences dominant shear stress for a very short duration, typically a few seconds, resulting in less physical damage to the target objects. This advantage allows it to be applied to sensitive processes such as the manufacturing of cell therapies.

Additionally, according to one embodiment, the automatic separation system for a target object can have its driving unit miniaturized, enabling its use even within a clean bench.

The description of the present disclosure provided above is illustrative, and it is to be understood by those skilled in the art to which the present disclosure pertains that other specific modifications may be easily made without departing from the technical idea or essential feature of the present invention. Therefore, it is to be understood that the embodiments described hereinabove are illustrative rather than being restrictive in all aspects. For example, respective components described as a single form may be implemented in a distributed manner, and likewise, components described as being distributed may also be implemented in a combined form.

It is to be understood that the scope of the present disclosure will be defined by the claims described below rather than the detailed description described above and all modifications and alterations derived from the meanings and ranges of the claims and their equivalents fall within the scope of the present disclosure.

## Claims

1. An automatic separation system for a target object, comprising:

   a fluid injection device;
   a target object separation unit including a plurality of target object separation devices;
   an integrated inlet for injecting fluid into the target object separation unit using the fluid injection device;
   a target object integrated outlet for discharging target objects concentrated in a certain direction in the target object separation unit;
   a target object collection unit for collecting the target objects discharged through the target object integrated outlet; and
   a connection unit including at least one of a first connection part connecting the fluid injection device and the integrated inlet, or a second connection part connecting the target object integrated outlet and the target object collection unit,
   wherein the connection unit further includes a fourth connection part connecting the integrated inlet and an inlet of each of the plurality of target object separation devices, and
   wherein the fluid injected into the integrated inlet is divided and injected into the inlet of each of the plurality of target object separation devices through the fourth connection part.

2. The automatic separation system for a target object of claim 1, further comprising:

   a non-target object integrated outlet for discharging non-target objects, which are not the target objects, from the target object separation unit; and
   a non-target object collection unit for collecting the non-target objects discharged through the non-target object integrated outlet,
   wherein the connection unit includes a third connection part connecting the non-target object integrated outlet and the non-target object collection unit.

3. The automatic separation system for a target object of claim 1, wherein the plurality of target object separation devices are arranged in parallel.

4. The automatic separation system for a target object of claim 1, wherein the connection unit hermetically connects two or more of the fluid injection device, the target object separation unit, the integrated inlet, the target object integrated outlet, and the target object collection unit to prevent external exposure.

5. The automatic separation system for a target object of claim 1, further comprising:

   a user input unit; and
   a processor configured to control at least one of the fluid injection device or the connection unit, wherein the processor acquires a first user input for operating the automatic separation system for a target object through the user input unit, and controls the fluid injection device to continuously inject fluid into the target object separation unit based on the first user input.

6. The automatic separation system for a target object of claim 1, further comprising:

   a display; and
   a processor configured to control at least one of the fluid injection device or the connection unit, wherein the processor outputs separation operation information of the automatic separation system for a target object to the display, and wherein the separation operation information includes at least one of information of the fluid, information of the target object, information of non-target object, flow rate information, separation speed information, elapsed time information, or required time information.

7. The automatic separation system for a target object of claim 1, further comprising:

   a memory storing an algorithm for controlling flow rate;
   a user input unit; and
   a processor configured to control at least one of the fluid injection device or the connection unit, wherein the processor receives a second user input for controlling the flow rate through the user input unit, and controls the speed of the injected fluid based on the second user input and the algorithm for controlling the flow rate.

8. The automatic separation system for a target object of claim 1, wherein the target object separation unit is replaceable depending on the type of the target object and whether the target object separation unit is used.

9. The automatic separation system for a target object of claim 1, wherein each of the plurality of target object separation devices comprises:

   an injection part into which fluid introduced from the integrated inlet is injected;
   a first channel part including one or more first structures, which allows the target objects to be concentrated and flow in a certain direction during the flow of the injected fluid; and
a target object acquisition part for acquiring the target objects concentrated in the certain direction.

10. The automatic separation system for a target object of claim 9, wherein each of the plurality of target object separation devices further comprises at least one of:

a non-target object discharge part,
a high-speed channel part extending and formed in at least a portion of an area between the injection part and the target object acquisition part,
a second channel part formed separately from the first channel part and having the same height as the first channel part, or
pillar structures arranged in one or more areas among the injection part, the first channel part, the second channel part, the target object acquisition part, and the non-target object discharge part.

11. An automatic separation method for a target object, comprising steps of:

injecting fluid into an integrated inlet of a target object separation unit using a fluid injection device;
flowing the fluid by the target object separation unit which includes a plurality of target object separation devices;
based on flowing the fluid, discharging target objects concentrated in a certain direction in the target object separation unit through a target object integrated outlet; and
collecting the target objects discharged through the target object integrated outlet into a target object collection unit,
wherein the step of flowing the fluid by the target object separation unit includes:

dividing and injecting the fluid injected into the integrated inlet into an inlet of each of the plurality of target object separation devices through a fourth connection part connecting the integrated inlet and the inlet of each of the plurality of target object separation devices; and
flowing the fluid injected into the inlet of each of the plurality of target object separation devices within each of the plurality of target object separation devices, and
wherein at least one of a connection between the fluid injection device and the integrated inlet, or a connection between the target object integrated outlet and the target object collection unit, is hermetically connected to prevent external exposure.

12. The automatic separation method for a target object of claim 11, further comprising:

based on flowing the fluid, discharging non-target objects, which are not the target objects, from the target object separation unit through a non-target object integrated outlet; and
collecting the non-target objects discharged through the non-target object integrated outlet into a non-target object collection unit,
wherein the non-target object integrated outlet and the non-target object collection unit are hermetically connected to prevent external exposure.

13. The automatic separation method for a target object of claim 11, wherein the plurality of target object separation devices are arranged in parallel.

14. The automatic separation method for a target object of claim 11, wherein the automatic separation method for a target object comprises steps of:

acquiring a first user input for operating the automatic separation system for a target object;
based on the first user input, controlling at least one of the integrated inlet or a first connection part connecting the fluid injection device and the integrated inlet to continuously inject fluid into the target object separation unit using the fluid injection device;
receiving a second user input for controlling the flow rate;
based on the second user input and an algorithm for controlling the flow rate, controlling the speed of the injected fluid; and
outputting separation operation information of the automatic separation system for a target object, and
wherein the separation operation information includes at least one of information of the fluid, information of the target object, information of non-target object, flow rate information, separation speed information, elapsed time information, or required time information.

15. The automatic separation method for a target object of claim 11, wherein the target object separation unit is replaceable depending on the type of the target object and whether the target object separation unit is used.

# FIG. 1

EP 4 714 544 A1

# FIG. 2

# FIG. 3A

# FIG. 3B

# FIG. 4

200

Channel part

260    280                    270

FIG. 5A

**1st layer**
**2nd layer**

320  330  335  325

310  310  **1st layer curing**

340  350  355  345

310  **2nd layer curing**

**Micro-chip**
**QC solution**

370  380  360  375

**Micro pattern**  **Bonding cover**

370  380  375

**QC**

320  325

# FIG. 5B

EP 4 714 544 A1

# FIG. 6

# FIG. 7

700

| Processor (760) | ↔ | Fluid injection device (710) |
| | ↔ | Memory (720) |
| | ↔ | Display (730) |
| | ↔ | User input unit (740) |
| | ↔ | Connection unit (750) |

## INTERNATIONAL SEARCH REPORT

| International application No. |
|---|
| **PCT/KR2024/006784** |

| A. | CLASSIFICATION OF SUBJECT MATTER |
|---|---|

**B01L 3/00**(2006.01)i

According to International Patent Classification (IPC) or to both national classification and IPC

| B. | FIELDS SEARCHED |
|---|---|

Minimum documentation searched (classification system followed by classification symbols)

B01L 3/00(2006.01); B01D 39/00(2006.01); B81B 1/00(2006.01); B81B 7/00(2006.01); C12Q 1/6869(2018.01); G01N 33/48(2006.01); G01N 33/49(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 미세유체(microfluidic), 분리(separation), 농축(concentration), 주입(inject), 혈장 (plasma)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2369140 B1 (GWANGJU INSTITUTE OF SCIENCE AND TECHNOLOGY et al.) 03 March 2022 (2022-03-03)<br>See claim 1; and figure 1. | 1-15 |
| A | KR 10-2021-0108970 A (ELEMENT BIOSCIENCES, INC.) 03 September 2021 (2021-09-03)<br>See paragraph [0019]. | 1-15 |
| A | KR 10-0988931 B1 (POSTECH RESEARCH AND BUSINESS DEVELOPMENT FOUNDATION) 20 October 2010 (2010-10-20)<br>See paragraphs [0020]-[0021]; and figures 1 and 7. | 1-15 |
| A | KR 10-2015-0124895 A (KOREA UNIVERSITY RESEARCH AND BUSINESS FOUNDATION) 06 November 2015 (2015-11-06)<br>See paragraph [0082]; and figure 2. | 1-15 |
| A | KR 10-1602949 B1 (DAE YOUNG ONE. CO., LTD. et al.) 21 March 2016 (2016-03-21)<br>See paragraph [0047]; and figure 1. | 1-15 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 September 2024** | **09 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/006784**

| C. | DOCUMENTS CONSIDERED TO BE RELEVANT | |
|---|---|---|
| Category* | Citation of document, with indication, where appropriate, of the relevant passages | Relevant to claim No. |
| PX | KR 10-2626812 B1 (CURIOSIS CO., LTD.) 18 January 2024 (2024-01-18)<br>See claims 1-16.<br>This document is a published earlier application that serves as a basis for claiming priority of the present international application. | 1-15 |

Form PCT/ISA/210 (second sheet) (July 2022)

## INTERNATIONAL SEARCH REPORT
### Information on patent family members

| International application No. |
| --- |
| **PCT/KR2024/006784** |

| Patent document cited in search report | | | Publication date (day/month/year) | Patent family member(s) | | | Publication date (day/month/year) |
| --- | --- | --- | --- | --- | --- | --- | --- |
| KR | 10-2369140 | B1 | 03 March 2022 | KR | 10-2021-0057639 | A | 21 May 2021 |
| KR | 10-2021-0108970 | A | 03 September 2021 | AU | 2019-392932 | A1 | 11 June 2020 |
| | | | | AU | 2019-392932 | B2 | 02 November 2023 |
| | | | | AU | 2024-200383 | A1 | 08 February 2024 |
| | | | | CN | 112368077 | A | 12 February 2021 |
| | | | | CN | 112368077 | B | 24 November 2023 |
| | | | | CN | 117680210 | A | 12 March 2024 |
| | | | | EP | 3890887 | A1 | 13 October 2021 |
| | | | | JP | 2022-512328 | A | 03 February 2022 |
| | | | | JP | 7499767 | B2 | 14 June 2024 |
| | | | | US | 11426732 | B2 | 30 August 2022 |
| | | | | US | 2021-121882 | A1 | 29 April 2021 |
| | | | | WO | 2020-118255 | A1 | 11 June 2020 |
| KR | 10-0988931 | B1 | 20 October 2010 | KR | 10-2009-0105249 | A | 07 October 2009 |
| KR | 10-2015-0124895 | A | 06 November 2015 | KR | 10-1667146 | B1 | 17 October 2016 |
| | | | | WO | 2015-167047 | A1 | 05 November 2015 |
| KR | 10-1602949 | B1 | 21 March 2016 | KR | 10-2015-0137883 | A | 09 December 2015 |
| KR | 10-2626812 | B1 | 18 January 2024 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2024006784 W
- KR 1020230064717